# FASCICULE DE BREVET EUROPEEN

(11) **EP 2 910 469 B1**
(45) Date de publication et mention de la délivrance du brevet: **11.05.2016**
(21) Numéro de dépôt: 15000248.3
(22) Date de dépôt: 28.01.2015
(51) Int. Cl.: B64C 27/00, B64C 27/14, B64D 35/00

(54) **Aéronef et installation motrice d'aéronef munie d'un dispositif de liaison pour lier une boite de transmission de puissance et un moteur**
Luftfahrzeug und Antriebsanlage eines Luftfahrzeugs, die mit einer Anschlussvorrichtung zum Verbinden eines Leistungsübertragungsgetriebes und eines Motors ausgestattet ist
Aircraft and aircraft power plant provided with a connection device for connecting a power transmission unit and an engine

(30) Priorité: 19.02.2014 FR 1400444
(43) Date de publication de la demande: 26.08.2015
(73) Titulaire: Airbus Helicopters, 13725 Marignane Cedex (FR)
(72) Inventeur: Mercier, Christian, 13580 La Fare les Oliviers (FR)
(74) Mandataire: GPI & Associés

(56) Documents cités:
- FR-A- 1 388 363
- FR-A1- 2 232 481
- US-A- 2 718 756
- US-A- 3 034 583
- US-A- 3 383 933

## Description

La présente invention concerne une installation motrice d'un aéronef, et un aéronef muni de cette installation motrice. Plus particulièrement, l'invention concerne une installation motrice comprenant un dispositif de liaison pour lier une boite de transmission de puissance et un moteur.

Notamment, l'invention se situe dans le domaine des installations motrices de giravion munies d'un moteur à pistons, un moteur Diesel plus particulièrement.

Les giravions sont généralement équipés d'au moins un rotor qui est entraîné en rotation par une installation motrice. Cette installation motrice est pourvue d'au moins un moteur et d'une boîte de transmission de puissance, ladite boîte de transmission de puissance étant interposée entre le moteur et le rotor.

Ce moteur peut être un moteur à turbines relié par une chaîne de transmission de puissance à la boîte de transmission de puissance.

Une telle chaîne de transmission de puissance comprend un arbre de transmission s'étendant entre un arbre de sortie du moteur et un arbre d'entrée de la boîte de transmission de puissance. L'arbre de transmission peut comprendre un ou plusieurs tronçons.

Lors du fonctionnement de l'installation, le moteur et / ou la boîte de transmission de puissance peuvent être soumis à de légers déplacements.

En effet, la boîte de transmission de puissance peut être suspendue à la structure d'un aéronef par un système de suspension usuel. Ce système de suspension peut comprendre par exemple des barres de suspension et des moyens de suspension. On se référera à la littérature pour obtenir un enseignement à ce sujet.

De même, un moteur peut être attaché à cette structure de l'aéronef par des pieds, et le cas échéant par des moyens d'absorption d'énergie et/ou de déplacement tels que des moyens connus sous la dénomination « silent bloc ».

Par conséquent, la boîte de transmission de puissance et/ou le moteur peuvent être soumis en fonctionnement à des mouvements relatifs, par exemple des oscillations. Les mouvements peuvent être provoqués par le fonctionnement de la boîte de transmission de puissance et/ou du moteur, ou encore par la déformation des structures les soutenant.

Il en résulte que les organes de la chaîne de transmission de puissance risquent alors d'être désalignés les uns par rapport aux autres ce qui peut engendrer leur détérioration.

Pour limiter de tels désalignements, l'installation motrice peut comprendre une trompette de liaison entourant la chaîne cinématique. Cette trompette de liaison est alors rigidement fixée à la boîte de transmission de puissance et au moteur. La trompette de liaison a pour fonction de tendre à conserver constant l'écartement entre la boîte de transmission de puissance et le moteur, et d'assurer l'alignement adéquat des divers organes de la chaîne de transmission de puissance. Par exemple, une trompette de liaison peut avoir pour fonction d'aligner un arbre de transmission de puissance avec un arbre d'entrée de la boîte de transmission de puissance et un arbre de sortie du moteur.

Néanmoins, le risque de désalignement demeure.

Pour autoriser un éventuel désalignement entre l'arbre de transmission, l'arbre de sortie du moteur et l'arbre d'entrée de la boîte de transmission de puissance, la chaîne de transmission de puissance peut comprendre au moins un moyen d'accouplement élastique. Un moyen d'accouplement flexible peut être du type connu sous la dénomination « flector » par exemple. D'autres moyens d'accouplement sont envisageable, et par exemple du type décrit dans le document US 7959512.

Chaque moyen d'accouplement flexible permet de transmettre le couple moteur généré par le moteur vers la boîte de transmission de puissance. De plus, chaque moyen d'accouplement flexible se déforme en cas de désalignement axial ou angulaire pour autoriser ce désalignement et limiter l'impact du désalignement sur l'arbre de transmission. Dès lors, un moyen d'accouplement flexible peut être le siège d'efforts importants et peut se détériorer progressivement. Ces moyens d'accouplements sont alors surveillés régulièrement.

De plus, l'arbre de transmission peut aussi être étudié afin de présenter une souplesse suffisante pour autoriser un désalignement prédéterminé.

Dès lors, une installation motrice peut comporter une trompette de liaison pour limiter la présence de désalignements, et des moyens d'accouplements flexibles pour qu'un désalignement éventuel ait une conséquence limitée sur l'installation motrice.

Ce système est intéressant mais peut être difficile à dimensionner. Il peut nécessiter des essais pour évaluer les désalignements que va subir la chaîne de transmission de puissance. En particulier, les mouvements inertiels d'un moteur en vol peuvent être délicats à appréhender sans des essais complexes.

Pour des raisons écologiques ou économiques par exemple, il peut de plus être envisagé d'utiliser non pas un moteur à turbines, mais un moteur à pistons et par exemple un moteur diesel.

Néanmoins, un moteur à pistons est soumis à des mouvements différents du fait de la présence d'organes mobiles lors du démarrage, de l'accélération en régime du moteur, du fonctionnement même en régime stabilisé, ou de la mise en couple du moteur. Ces mouvements sont alors susceptibles de dégrader l'intégrité physique de l'arbre de transmission. Ces mouvements paraissent difficiles à appréhender en l'absence d'essais, comparés au mouvement plus linéaire d'un moteur à turbines.

Le document JP 2000065265 ne fait pas partie du domaine technique de l'invention en ayant trait à un dispositif pour limiter les efforts en cisaillement et en torsion d'un soufflet.

Les documents FR 2232481, FR 1388363, US 3383933, US 3034583 et US 2718756 sont par ailleurs éloignés de l'invention.

La présente invention a alors pour objet de proposer une installation motrice visant à limiter les éventuelles dégradations d'un arbre de transmission, notamment dans le cadre d'une mise en oeuvre d'un moteur à pistons.

L'invention concerne une installation motrice comprenant un moteur thermique et une boîte de transmission de puissance. Cette installation motrice comporte une chaîne de transmission de puissance s'étendant selon une direction longitudinale pour relier le moteur à la boîte de transmission de puissance. Dès lors, la chaîne de transmission de puissance est entraînée en rotation par le moteur puis met en mouvement la boîte de transmission de puissance. Cette chaîne de transmission de puissance comporte au moins un arbre de transmission de puissance et un moyen d'accouplement élastique.

Cette installation motrice comporte alors deux barres de liaison s'étendant respectivement selon une première direction et une deuxième direction non parallèles et coupant un axe géométrique de rotation commun. Chaque barre de liaison est articulée par une articulation à rotule à la boîte de transmission de puissance et au moteur pour éliminer un mouvement relatif selon la direction longitudinale entre la boîte de transmission de puissance et le moteur, et pour autoriser une rotation limitée de la boîte de transmission de puissance et du moteur par rapport à l'axe géométrique.

Cet axe géométrique peut s'étendre selon une direction en élévation qui est orthogonale à la direction longitudinale ou à une direction parallèle à cette direction longitudinale.

Dès lors, les barres de liaison limitent par nature, via une géométrie appropriée, les déplacements possibles du moteur relativement à la boîte de transmission de puissance.

Ces barres de liaison étant articulées par des rotules au moteur et à la boîte de transmission de puissance, les barres de liaison tendent à limiter le mouvement relatif du moteur et de la boîte de transmission de puissance à une rotation par rapport à leur axe géométrique de convergence. Ce mouvement relatif tend alors à être limité à une rotation par rapport à l'axe géométrique commun par lequel passe conjointement les deux barres de liaison.

Les deux barres de liaison peuvent donc être des bielles rigides susceptibles chacune de transmettre des efforts dans leur axe d'extension en compression et en traction. Ces barres de liaison introduisent ainsi une contrainte cinématique aux mouvements relatifs du moteur et de la boîte de transmission de puissance.

Par conséquent, l'invention comprend des barres de liaison ayant pour fonction de réduire les mouvements de l'arbre de transmission de puissance à des mouvements tendant à être prévisibles.

Par suite, un constructeur peut évaluer les mouvements relatifs de la boîte de transmission de puissance et du moteur, et ainsi peut dimensionner de manière adéquate la chaîne de transmission de puissance.

L'invention est d'autant plus digne d'intérêt lorsque le moteur thermique est un moteur à pistons et / ou lorsque la boîte de transmission de puissance entraîne un rotor de giravion.

En effet, l'implémentation des barres de liaison rend plus prévisible les modes de déplacement de la boîte de transmission de puissance et du moteur. Or, ces déplacements sont généralement délicats à prévoir dans le cas d'un moteur à pistons dont les mouvements et le torseur d'efforts transmis aux structures adjacents sont complexes et très variables durant un vol, contrairement à une turbine au fonctionnement plus permanent. Dès lors, l'invention propose une solution à ce problème en limitant ces déplacements à une rotation identifiable.

L'arbre de transmission peut alors être positionné à un emplacement résultant des positions de la boîte de transmission de puissance et du moteur ainsi que des déplacements autorisés par les barres de liaison. Ces déplacements sont maîtrisés et cinématiquement calculables. En effet, les barres de liaison suppriment des degrés de liberté entre le moteur et la boîte de transmission de puissance, et donc autorisent une meilleure connaissance du mouvement de la chaîne de transmission de puissance. Le dimensionnement de l'arbre de transmission notamment peut ainsi être affiné.

Par ailleurs, le moteur peut comprendre un bloc moteur et des pieds. Par exemple, le moteur est porté par quatre pieds qui le supportent sur une structure d'un aéronef et assurent également la reprise du couple moteur.

Dès lors, au moins une barre de liaison peut être articulée à un pied et / ou au moins une barre de liaison peut être articulée au bloc moteur.

Par ailleurs, l'installation motrice peut comporter au moins un système de suspension élastique pour relier la boîte de transmission de puissance à une structure porteuse.

Le système de suspension peut être un système de l'état de la technique pour par exemple filtrer les vibrations résultant du mouvement rotatif d'un rotor entraîné par la boîte de transmission de puissance. On se référera à la littérature pour obtenir la description d'un tel système de suspension.

Le système de suspension est donc techniquement intéressant mais peut conférer une liberté de mouvement à la boîte de transmission de puissance en vol. Cette liberté de mouvement est néanmoins contrainte par les barres de liaison.

Par ailleurs, l'installation motrice peut comporter au moins un moyen d'absorption d'énergie pour relier le moteur à une structure porteuse.

Le moyen d'absorption d'énergie peut être un système de l'état de la technique, tel qu'un dispositif connu sous l'appellation « silent bloc ». On se référera à la littérature pour obtenir la description d'un tel moyen d'absorption d'énergie. Le moyen d'absorption d'énergie peut conférer une liberté de mouvement au moteur. Cette liberté de mouvement est néanmoins contrainte par les barres de liaison.

Par ailleurs, les barres de liaison peuvent se croiser l'une au dessus de l'autre entre la boîte de transmission de puissance et le moteur, l'axe géométrique étant agencé entre la boîte de transmission de puissance et le moteur.

Dès lors, l'axe géométrique peut passer par le moyen d'accouplement élastique.

Les barres de liaison convergent vers un axe géométrique pouvant être localisé au niveau d'un moyen d'accouplement élastique. Ce moyen d'accouplement élastique peut être un système de l'état de la technique, tel qu'un dispositif connu sous l'appellation « flector » par exemple mais non exclusivement. On se référera à la littérature pour obtenir la description d'un tel moyen d'accouplement élastique.

Ainsi, le moyen d'accouplement élastique est sollicité essentiellement en flexion. En effet, le moyen d'accouplement élastique se situe au niveau d'un centre instantané de rotation du moteur et de la boîte de transmission de puissance. Dès lors, le moyen d'accouplement est sollicité en flexion, et non pas en cisaillement, en traction ou en compression. La durée de vie de ce moyen d'accouplement élastique peut alors être améliorée par rapport à un dispositif usuel pour lequel le moyen d'accouplement élastique est le siège de multiples efforts.

Par suite, la chaine de transmission de puissance peut comporter un arbre de transmission relié à un arbre de sortie du moteur par un premier moyen d'accouplement élastique et à un arbre d'entrée de la boîte de transmission de puissance par un deuxième moyen d'accouplement élastique. L'axe géométrique passe alors par le deuxième moyen d'accouplement élastique.

Eventuellement, une première distance minimale séparant l'axe géométrique de la boîte de transmission de puissance est inférieure à une deuxième distance minimale séparant l'axe géométrique du moteur.

Cette caractéristique permet d'optimiser le positionnement de l'arbre de transmission et notamment du deuxième moyen d'accouplement élastique dans le cadre de la réalisation décrite précédemment, ainsi que la répartition du taux de travail en déformation des moyens d'accouplements élastiques en faisant varier à loisir le positionnement de l'axe géométrique.

Outre une installation motrice, l'invention vise un aéronef muni d'une telle installation motrice. Par exemple, la boîte de transmission de puissance entraîne un rotor de sustentation et /ou de propulsion et /ou de contrôle du mouvement en lacet de l'aéronef.

L'invention et ses avantages apparaîtront avec plus de détails dans le cadre de la description qui suit avec des exemples donnés à titre illustratif en référence aux figures annexées qui représentent :
- la figure 1, une vue d'une installation motrice d'un aéronef selon l'invention,
- la figure 2, un schéma présentant deux barres de liaison convergeant vers un axe géométrique localisé au niveau d'une boîte de transmission de puissance,
- la figure 3, un schéma présentant deux barres de liaison convergeant vers un axe géométrique localisé entre une boîte de transmission de puissance et un moteur, et
- les figures 4 et 5, deux schémas présentant le mouvement rotatif autorisé par les barres de liaison.

Les éléments présents dans plusieurs figures distinctes sont affectés d'une seule et même référence.

On note que trois directions X, Y et Z orthogonales les unes par rapport aux autres sont représentées sur certains figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

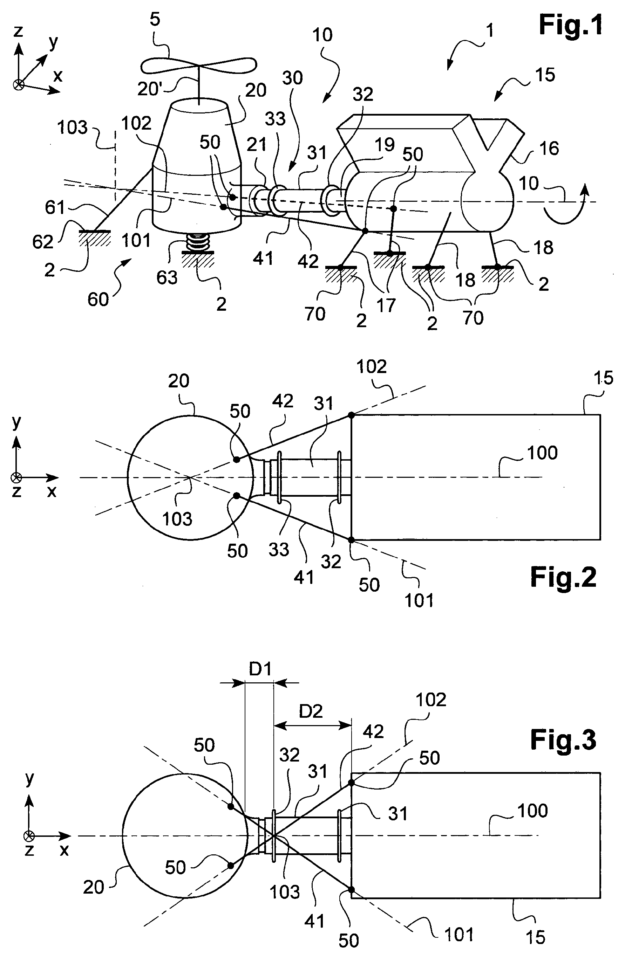

La figure 1 présente un aéronef 1. Cet aéronef 1 est muni d'une installation motrice 10 pour par exemple mettre en rotation un rotor 5. L'aéronef peut être un giravion, le rotor 5 étant alors par exemple un rotor assurant au moins partiellement la sustentation de ce giravion et / ou sa propulsion.

L'installation motrice 10 comporte un moteur 15 reposant sur une structure 2 de l'aéronef. Ce moteur 15 est un moteur thermique, et éventuellement un moteur à pistons.

Indépendamment de la nature du moteur, le moteur 15 est pourvu d'un bloc moteur 16 et de pieds 17, 18. On appelle « bloc moteur » la partie motrice en tant que telle du moteur 15, et « pieds » les moyens de fixation du moteur à la structure 2.

Par exemple, le bloc moteur repose sur la structure 2 par le biais de quatre pieds, et notamment d'une paire de pieds dits « pied avant 17 » et d'une paire de pieds dits « pied arrière 18 ».

De plus, le moteur 15 peut être relié à la structure porteuse directement par ses pieds, ou indirectement par au moins un moyen d'absorption d'énergie 70. Par exemple, un moyen d'absorption d'énergie 70 est interposé entre chaque pied 17, 18 et la structure 2. Au moins un pied peut aussi comprendre un tel moyen d'absorption d'énergie.

Le moteur 15 a notamment pour fonction de mettre en mouvement une boîte de de transmission de puissance 20 de l'installation motrice 10.

Cette boîte de transmission de puissance 20 peut alors comporter un mât 20' mettant en rotation le rotor 5.

Par ailleurs, la boîte de transmission de puissance 20 est reliée à la structure porteuse soit directement soit indirectement par un système de suspension élastique 60. Ce système de suspension élastique est éventuellement pourvu de barres de liaison 61, de dispositifs à balanciers 62, ou encore de moyens 63 interposés entre le fond de la boîte de transmission de puissance 20 et la structure 2 de l'aéronef.

L'installation motrice est alors munie d'une chaîne de transmission de puissance 30 s'étendant selon une direction longitudinale 100 du moteur 15 vers la boîte de transmission de puissance 20. La direction longitudinale 100 peut être un axe de symétrie de l'arbre de transmission.

Cette chaîne de transmission de puissance peut comporter un arbre de transmission 31 et deux moyens d'accouplement élastiques 32, 33. L'arbre de transmission 31 peut être muni d'un ou plusieurs tronçons reliés les uns aux autres. Néanmoins la variante de la figure 1 présente un arbre de transmission comprenant un unique tronçon.

Dès lors, l'arbre de transmission de puissance 31 est éventuellement relié par un premier moyen d'accouplement élastique 32 à un arbre de sortie 19 du moteur 15. De plus, l'arbre de transmission 31 peut être relié par un deuxième moyen d'accouplement élastique 33 à un arbre d'entrée 21 de la boîte de transmission de puissance 20.

En outre, l'installation motrice comporte deux barres de liaison 41, 42 reliant le moteur 15 à la boîte de transmission de puissance 20. Cette installation peut alors être dépourvue de trompettes.

Chaque barre de liaison 41, 42 est articulée par une articulation 50 à rotule à la boîte de transmission 20 et au moteur 15. Chaque barre de liaison 41, 42 est alors articulée par une rotule au bloc moteur 16 ou à un pied 17 du moteur 15.

Une première barre de liaison 41 s'étend selon une première direction 101 qui n'est pas parallèle à la direction longitudinale 100. De plus, une deuxième barre de liaison 42 s'étend selon une deuxième direction 102 qui n'est parallèle ni à la direction longitudinale 100 ni à la première direction 101.

Par suite, la première direction 101 et la deuxième direction 102 convergent en partant du moteur 15 vers un même axe géométrique 103 s'étendant en élévation. Par exemple, la première direction 101 et la deuxième direction 102 sont symétriques par rapport à la direction longitudinale 100.

Selon l'inclinaison de la première direction 101 et de la deuxième direction 102 par rapport à la direction longitudinale 100, une barre de liaison peut éventuellement passer au dessus de l'autre barre de liaison. Les barres de liaison peuvent aussi être coplanaires, une barre de liaison traversant un orifice de l'autre barre de liaison.

Selon la variante de la figure 2, cette inclinaison est faible. Dès lors, les barres de liaison 41, 42 convergent vers un axe géométrique 103 localisé au niveau de la boîte de transmission de puissance 20. Il en résulte que les barres de liaison 41, 42 ne se croisent pas.

Par contre, cette inclinaison est plus importante selon la variante de la figure 3. Dès lors, les barres de liaison 41, 42 convergent vers un axe géométrique 103 localisé entre la boîte de transmission de puissance 20 et le moteur 15. Il en résulte que les barres de liaison 41, 42 peuvent se croiser en passant une au dessus de l'autre au niveau de leur intersection avec l'axe géométrique 103.

L'axe géométrique 103 peut alors être plus près de la boîte de transmission de puissance 20 que du moteur 15. Ainsi, une première distance D1 minimale séparant l'axe géométrique 103 de la boîte de transmission de puissance 20 est inférieure à une deuxième distance D2 minimale séparant l'axe géométrique 103 du moteur 15. La première distance est dite « minimale » en représentant la plus petite distance entre l'axe géométrique 103 et un carter de la boîte de transmission de puissance 20. De même, la deuxième distance est dite « minimale » en représentant la plus petite distance entre l'axe géométrique 103 et un carter du bloc moteur 16.

Dès lors, l'axe géométrique 103 peut être sécant à un moyen d'accouplement élastique de la chaîne de transmission de puissance, et notamment au deuxième moyen d'accouplement élastique 33.

L'axe géométrique peut être localisé longitudinalement entre le premier moyen d'accouplement élastique 32 et le deuxième moyen d'accouplement élastique 33. Cet agencement permet de partager les déformations à volonté entre ces deux moyens d'accouplement élastiques.

Indépendamment de la variante, l'axe géométrique 103 peut être sécant à la direction longitudinale 100.

De plus, l'axe géométrique 103 représente un axe de rotation instantané de la boîte de transmission de puissance 20 par rapport au moteur 15, et inversement.

En effet, lorsque le moteur est opérant, les barres de liaison 41, 42 autorisent des rotations antagonistes de la boîte de transmission de puissance 20 et du moteur 15 par rapport à l'axe géométrique 103, et tendent à empêcher un mouvement relatif selon la direction longitudinale 100 entre la boîte de transmission de puissance 20 et le moteur 15.

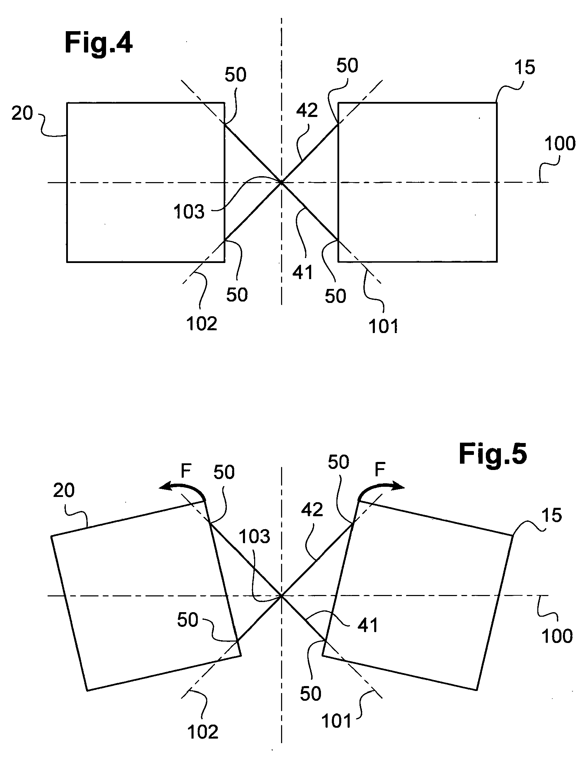

Les figures 4 et 5 explicitent ce fonctionnement.

En référence à la figure 4, la boîte de transmission de puissance 20 et le moteur 15 sont agencés dans une position théorique à l'arrêt du moteur 15.

Par contre, lorsque le moteur 15 fonctionne, la boîte de transmission 20 et/ou le moteur 15 tendent à se déplacer par rapport à leurs positions théoriques.

En référence à la figure 5, ces déplacements sont contraints par les barres de liaison 41, 42. En effet, les barres de liaison tendent à induire des rotations antagonistes de la boîte de transmission 20 et du moteur 15 selon les flèches F par rapport à l'axe géométrique 103.

Ces déplacements sont donc bien identifiés. Le constructeur peut alors prendre en considération des mouvements prévisibles en vol pour dimensionner la chaîne de transmission de puissance notamment.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Installation motrice (10) comprenant un moteur (15) thermique et une boîte de transmission de puissance (20), ladite installation motrice (10) comportant une chaîne de transmission de puissance (30) s'étendant selon une direction longitudinale (100) pour relier ledit moteur (15) à ladite boîte de transmission de puissance (20), ladite chaîne de transmission de puissance (30) étant entraînée en rotation par ledit moteur (15) et mettant en mouvement ladite boîte de transmission de puissance (20), ladite chaîne de transmission de puissance (30) comportant au moins un arbre de transmission (31) et un moyen d'accouplement élastique (32, 33),
**caractérisée en ce que** ladite installation motrice (10) comporte deux barres de liaison (41, 42) s'étendant respectivement selon une première direction (101) et une deuxième direction (102) non parallèles et coupant un axe géométrique (103) de rotation commun, chaque barre de liaison (41, 42) étant articulée par une articulation (50) à rotule à la boîte de transmission de puissance (20) et au moteur (15) pour éliminer un mouvement relatif selon ladite direction longitudinale (100) entre la boîte de transmission de puissance (20) et le moteur (15) et pour autoriser une rotation limitée de ladite boîte de transmission de puissance (20) et dudit moteur (15) par rapport audit axe géométrique (103).

2. Installation motrice selon la revendication 1,
**caractérisée en ce que** ledit moteur (15) est un moteur à pistons, ladite boîte de transmission de puissance (20) entraînant un rotor (5) de giravion.

3. Installation motrice selon l'une quelconque des revendications 1 à 2,
**caractérisée en ce que** ledit moteur (15) comprenant un bloc moteur (16) et des pieds (17, 18), au moins une barre de liaison (41, 42) est articulée à un pied (17).

4. Installation motrice selon l'une quelconque des revendications 1 à 3,
**caractérisée en ce que** ledit moteur (15) comprenant un bloc moteur (16) et des pieds (17, 18), au moins une barre de liaison (41, 42) est articulée au bloc moteur (16).

5. Installation motrice selon l'une quelconque des revendications 1 à 4,
**caractérisée en ce que** lesdites barres de liaison (41, 42) se croisent l'une au dessus de l'autre entre la boîte de transmission de puissance (20) et ledit moteur (15), ledit axe géométrique (103) étant agencé entre la boîte de transmission de puissance (20) et ledit moteur (15).

6. Installation motrice selon la revendication 5,
**caractérisée en ce qu'**une première distance (D1) minimale séparant ledit axe géométrique (103) de la boîte de transmission de puissance (20) est inférieure à une deuxième distance (D2) minimale séparant ledit axe géométrique (103) du moteur (15).

7. Installation motrice selon l'une quelconque des revendications 1 à 6,
**caractérisée en ce que** ladite installation motrice (10) comporte au moins un système de suspension élastique (60) pour relier ladite boîte de transmission de puissance (20) à une structure porteuse (2).

8. Installation motrice selon l'une quelconque des revendications 1 à 7,
**caractérisée en ce que** ladite installation motrice (10) comporte au moins un moyen d'absorption d'énergie (70) pour relier ledit moteur (15) à une structure porteuse (2).

9. Installation motrice selon l'une quelconque des revendications 1 à 8,
**caractérisée en ce que** ledit axe géométrique (103) passe par ledit moyen d'accouplement élastique (33).

10. Installation motrice selon la revendication 9,
**caractérisée en ce que**, ladite chaîne de transmission de puissance (30) comportant un arbre de transmission (31) relié à un arbre de sortie (19) du moteur (15) par un premier moyen d'accouplement élastique (32) et à un arbre d'entrée (21) de la boîte de transmission de puissance (20) par un deuxième moyen d'accouplement élastique (33), ledit axe géométrique (103) passe par ledit deuxième moyen d'accouplement élastique (33).

11. Installation motrice selon l'une quelconque des revendications 1 à 10,
**caractérisée en ce que** ledit axe géométrique (103) est orthogonal à ladite direction longitudinale (100).

12. Aéronef (1),
**caractérisée en ce que** ledit aéronef (1) comporte une installation motrice (10) selon l'une quelconque des revendications 1 à 10.

## Patentansprüche

1. Antriebsanlage (10) mit einem Verbrennungsmotor (15) und einem Leistungsübertragungsgetriebe (20), wobei die Antriebsanlage (10) eine Leistungsübertragungskette (30) aufweist, die sich in einer Längsrichtung (100) erstreckt, um den Motor (15) mit dem Leistungsübertragungsgetriebe (20) zu verbinden, wobei die Leistungsübertragungskette (30) durch den Motor (15) drehangetrieben wird und wobei die Leistungsübertragungskette das Leistungsübertragungsgetriebe (20) in Bewegung versetzt, wobei die Leistungsübertragungskette (30) mindestens eine Kraftübertragungswelle (31) und ein elastisches Kupplungsmittel (32, 33) aufweist,
**dadurch gekennzeichnet, dass** die Antriebsanlage (10) zwei Verbindungsstangen (41, 42) aufweist, die sich jeweils in eine erste Richtung (101) und eine zweite Richtung (102) erstrecken, die nicht parallel zueinander sind und eine gemeinsame geometrische Rotationsachse (103) schneiden, wobei jede Verbindungsstange (41, 42) über ein Kugelgelenk (50) an dem Leistungsübertragungsgetriebe (20) und am Motor (15) angelenkt ist, um eine Relativbewegung in der Längsrichtung (100) zwischen dem Leistungsübertragungsgetriebe (20) und dem Motor (15) auszuschalten und um eine begrenzte Drehung des Leistungsübertragungsgetriebes (20) und des Motors (15) relativ zu der geometrischen Achse (103) zu erlauben.

2. Antriebsanlage nach Anspruch 1,
**dadurch gekennzeichnet, dass** der Motor (15) ein Kolbenmotor ist, wobei das Leistungsübertragungsgetriebe (20) einen Rotor (5) eines Drehflügelflugzeugs antreibt.

3. Antriebsanlage nach einem der Ansprüche 1 bis 2,
**dadurch gekennzeichnet, dass** der Motor (15) einen Motorblock (16) und Füße (17, 18) aufweist, wobei mindestens eine Verbindungsstange (41, 42) an einem Fuß (17) angelenkt ist.

4. Antriebsanlage nach einem der Ansprüche 1 bis 3,
**dadurch gekennzeichnet, dass** der Motor (15) einen Motorblock (16) und Füße (17, 18) aufweist, wobei mindestens eine Verbindungsstange (41, 42) am Motorblock (16) angelenkt ist.

5. Antriebsanlage nach einem der Ansprüche 1 bis 4,
**dadurch gekennzeichnet, dass** die Verbindungsstangen (41, 42) sich eine über der anderen zwischen dem Leistungsübertragungsgetriebe (20) und dem Motor (15) kreuzen, wobei die geometrische Achse (103) zwischen dem Leistungsübertragungsgetriebe (20) und dem Motor (15) angeordnet ist.

6. Antriebsanlage nach Anspruch 5,
**dadurch gekennzeichnet, dass** ein erster minimaler Abstand (D1), der die geometrische Achse (103) von dem Leistungsübertragungsgetriebe (20) trennt, kleiner ist als ein zweiter minimaler Abstand (D2), der die geometrische Achse (103) von dem Motor (15) trennt.

7. Antriebsanlage nach einem der Ansprüche 1 bis 6,
**dadurch gekennzeichnet, dass** die Antriebsanlage (10) mindestens ein elastisches Aufhängungssystem (60) aufweist, um das Leistungsübertragungsgetriebe (20) mit einer Trägerstruktur (2) zu verbinden.

8. Antriebsanlage nach einem der Ansprüche 1 bis 7,
**dadurch gekennzeichnet, dass** die Antriebsanlage (10) mindestens ein Energieabsorptionsmittel (70) aufweist, um den Motor (15) mit einer Trägerstruktur (2) zu verbinden.

9. Antriebsanlage nach einem der Ansprüche 1 bis 8,
**dadurch gekennzeichnet, dass** die geometrische Achse (103) durch das elastische Kupplungsmittel (33) verläuft.

10. Antriebsanlage nach Anspruch 9,
**dadurch gekennzeichnet, dass** die Leistungsübertragungskette (30) eine Übertragungswelle (31) aufweist, die mit einer Ausgangswelle (19) des Motors (15) durch ein erstes elastisches Kupplungsmittel (32) und mit einer Eingangswelle (21) des Leistungsübertragungsgetriebes (20) über ein zweites elastisches Kupplungsmittel (33) verbunden ist, wobei die geometrische Achse (103) durch das zweite elastische Kupplungsmittel verläuft.

11. Antriebsanlage nach einem der Ansprüche 1 bis 10,
**dadurch gekennzeichnet, dass** die geometrische Achse (103) senkrecht zu der Längsrichtung (100) ist.

12. Luftfahrzeug (1),
**dadurch gekennzeichnet, dass** das Luftfahrzeug (1) eine Antriebsanlage (10) nach einem der Ansprüche 1 bis 10 aufweist.

## Claims

1. Power plant (10) comprising a thermal engine (15) and a power transmission gearbox (20), said power plant (10) comprising a power transmission chain (30) extending along a longitudinal direction (100) to connect said engine (15) to said power transmission gearbox (20), said power transmission chain (30) being driven in rotation by said engine (15) and setting in motion said power transmission gearbox (20), said power transmission chain (30) comprising at least one transmission shaft (31) and an elastic coupling means (32, 33),
**characterised in that** said power plant (10) comprises two connection bars (41, 42) extending respectively along a first direction (101) and a second direction (102) not parallel and intersecting a common geometrical axis of rotation (103), each connection bar (41, 42) being articulated by a ball joint (50) to the power transmission gearbox (20) and to the engine (15) in order to eliminate a relative movement along said longitudinal direction (100) between the power transmission gearbox (20) and the engine (15) and in order to allow limited rotation of said power transmission gearbox (20) and of said engine (15) relative to said geometrical axis (103).

2. Power plant according to claim 1,
**characterised in that** said engine (15) is a piston engine, said power transmission gearbox (20) driving a rotorcraft rotor (5).

3. Power plant according to any one of claims 1 to 2,
**characterised in that** said engine (15) comprising an engine block (16) and legs (17, 18), at least one connection bar (41, 42) is articulated to a leg (17).

4. Power plant according to any one of claims 1 to 3,
**characterised in that** said engine (15) comprising an engine block (16) and legs (17, 18), at least one connection bar (41, 42) is articulated to the engine block (16).

5. Power plant according to any one of claims 1 to 4,
**characterised in that** said connection bars (41, 42) cross one over the other between the power transmission gearbox (20) and said engine (15), said geometrical axis (103) being arranged between the power transmission gearbox (20) and said engine (15).

6. Power plant according to claim 5,
**characterised in that** a first minimum distance (D1) separating said geometrical axis (103) from the power transmission gearbox (20) is less than a second minimum distance (D2) separating said geometrical axis (103) from the engine (15).

7. Power plant according to any one of claims 1 to 6,
**characterised in that** said power plant (10) comprises at least one flexible suspension system (60) for connecting said power transmission gearbox (20) to a carrying structure (2).

8. Power plant according to any one of claims 1 to 7,
**characterised in that** said power plant (10) comprises at least one energy absorption means (70) for connecting said engine (15) to a carrying structure (2).

9. Power plant according to any one of claims 1 to 8,
**characterised in that** said geometrical axis (103) passes through said elastic coupling means (33).

10. Power plant according to claim 9,
**characterised in that**, said power transmission chain (30) comprising a transmission shaft (31) connected to an output shaft (19) of the engine (15) by a first elastic coupling means (32) and to an input shaft (21) of the power transmission gearbox (20) by a second elastic coupling means (33), said geometrical axis (103) passes through said second elastic coupling means (33).

11. Power plant according to any one of claims 1 to 10,
**characterised in that** said geometrical axis (103) is orthogonal to said longitudinal direction (100).

12. Aircraft (1),
**characterised in that** said aircraft (1) comprises a power plant (10) according to any one of claims 1 to 10.
